Europäisches Patentamt

(19) European Patent Office

Office européen des brevets

(11) EP 0 732 188 B1

## (12) EUROPÄISCHE PATENTSCHRIFT

(45) Veröffentlichungstag und Bekanntmachung des Hinweises auf die Patenterteilung:
**28.01.2004 Patentblatt 2004/05**

(51) Int Cl.7: **B29C 59/08**
// B29K23:00

(21) Anmeldenummer: **96103375.0**

(22) Anmeldetag: **05.03.1996**

(54) **Verfahren zur Behandlung einer siegelfähigen Folienoberfläche**

Method for treating a sealable film surface

Procédé pour traiter une surface de feuille scellable

(84) Benannte Vertragsstaaten:
**BE DE ES FR GB IT NL**

(30) Priorität: **14.03.1995 DE 19508668**

(43) Veröffentlichungstag der Anmeldung:
**18.09.1996 Patentblatt 1996/38**

(73) Patentinhaber: **Trespaphan GmbH**
**66539 Neunkirchen (DE)**

(72) Erfinder:
- **Peiffer, Herbert, Dr.**
  **D-55126 Mainz (DE)**
- **Schmidt, Robert, Dr.**
  **D-66424 Homburg (DE)**
- **Busch, Detlef, Dipl.-Ing.**
  **D-66740 Saarlouis (DE)**
- **Ernst, Frank, Dipl.-Ing.**
  **D-65817 Eppstein (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
DE-A- 1 569 313        DE-A- 2 203 510
DE-A- 4 106 358        DE-B- 1 007 051
DE-U- 9 001 676        GB-A- 1 005 454
GB-A- 1 117 354        US-A- 2 632 921
US-A- 2 746 084        US-A- 4 255 123
US-A- 4 634 373

- **PATENT ABSTRACTS OF JAPAN vol. 011, no. 098 (M-575), 27.März 1987 & JP 61 246512 A (MATSUSHITA ELECTRIC IND CO LTD), 1.November 1986,**

**Beschreibung**

Die vorliegende Erfindung betrifft ein Verfahren zur Behandlung einer siegelfähigen Folienoberfläche mittels Flamme. Die Folien zeichnen sich durch gute Siegelbarkeit, gute Bedruckbarkeit und gutes antistatisches Verhalten aus.

Zur Erhöhung der Oberflächenspannung von Polypropylenfolien werden die Flammbehandlung und die Coronabehandlung eingesetzt. Die Folien werden dadurch bedruckbar und mit Beschichtungssystemen auf wäßriger Basis benetzbar. Während die Coronabehandlung bei siegelfähigen und bei nicht siegelfähigen Folien eingesetzt wird, wird die Flammbehandlung hauptsächlich bei nicht siegelfähigen Folien genutzt.

Bei der Flammbehandlung von nicht siegelfähigen Folien wird die Folie über eine Kühlwalze geführt, unterhalb derer ein Gasbrenner angeordnet ist. Der Abstand zwischen Brenner und Folienoberfläche/Kühlwalze beträgt 3 bis 10 mm und ist so gewählt, daß die Oxidationsreaktionen auf der Polymeroberfläche maximal werden. Bei der Oxidation der Polymeroberfläche entstehen oxidierte polare Gruppen, wodurch die Oberflächenspannung der Folie in der gewünschten Weise vergrößert wird. Voraussetzung für eine einwandfreie Behandlung der Folie ist eine exakte Anlegung der Folienbahn auf der Kühlwalze und eine konstante Kühlwalzentemperatur. Die Anlegung der Folie an die Kühlwalze geschieht in der Regel über eine gummierte Nipwalze.

Es wird gelehrt, die Behandlung von nicht siegelfähigen Folien bei einer Kühlwalzentemperatur von größer als 36 °C durchzuführen (vgl. "The base flame treatment process", H. Angeli/Fa. Esse Ci, 3rd International Meeting on the Plastic Surface Treatment, 1989, Narni, Italien). Unterhalb dieser Temperatur tritt auf der Folienoberfläche Wasserdampfkondensation auf, die die Folie unbrauchbar macht. Eine typische Kühlwalzentemperatur bei nicht siegelfähiger Folie ist 40 °C.

Gegenüber der Coronabehandlung weist die Flammbehandlung von nicht siegelfähigen Folien Vorteile auf. Diese sind eine hohe und zeitlich konstante Oberflächenspannung, ein geringer Geruch der Folie und kein Auftreten von Rückseiteneffekt. Nachteilig ist die sehr hohe thermische Belastung der Folienoberfläche.

Siegelfähige Polypropylenfolien, die gegenüber thermischer Belastung empfindlich sind, werden bei der Flammbehandlung derart geschädigt, daß sie ihre Siegelfähigkeit verlieren. Die Anwendung des oben beschriebenen Verfahrens auf siegelfähige Folien ist daher nicht praktikabel. Die thermische Belastung der siegelfähigen Oberfläche ist zu hoch, und bei Erniedrigung der Kühlwalzentemperatur kommt es zu der beschriebenen Wasserdampfkondensation.

Bei siegelfähigen Folien wird daher gelehrt, die Flammbehandlung mit Polarisation anzuwenden (vgl. "The polarized flame process", H. Lori/Fa. Esse Ci, 3rd International Meeting on the Plastic Surface Treatment, 1989, Narni, Italien). Bei dieser Methode wird der Brenner oberhalb der Kühlwalze angeordnet. Zwischen dem Brenner und der Kühlwalze wird dabei eine Gleichspannung angelegt, wodurch die ionisierten Atome in der Flamme eine erhöhte Beschleunigung erhalten und mit größerer kinetischer Energie auf die Polymeroberfläche auftreffen. Die chemischen Bindungen innerhalb der Polymermoleküle werden leichter aufgebrochen, und die Radikalbildung geht schneller vonstatten. Die thermische Belastung der Polymeroberfläche ist geringer als bei der Flammbehandlung ohne Polarisation. Bei gleicher Flammtemperatur wird beim Verfahren mit Polarisation eine höhere Oberflächenspannung erzielt als beim Verfahren ohne Polarisation. Anders ausgedrückt, zur Erzielung der gleichen Oberflächenspannung wird beim Verfahren mit Polarisation eine niedrigere Flammtemperatur benötigt als beim Verfahren ohne Polarisation, wodurch die Siegelschicht geschont wird. Daher kann bei der Flammbehandlung mit Polarisation infolge der geänderten thermischen Bedingungen die Kühlwalzentemperatur auf eine Temperatur von 20 °C abgesenkt werden, ohne daß Kondensation auf der Folienoberfläche auftritt.

Nachteilig an der Flammbehandlung mit Polarisation ist die starke statische Aufladung der Folie. Damit sind folgende negative Punkte verbunden:

1. Das Handling der Folie ist erschwert. Die aufgerollte Folie ist derart aufgeladen, daß sie vom Maschinenpersonal nicht mehr zu handhaben ist. Es entsteht eine hohe Unfallgefahr, die auch durch technische Maßnahmen wie aktive oder passive Entladung der Folie nicht zu beseitigen ist.

2. Die Qualität der Folie ist vermindert. Durch die hohe statische Aufladung der Folie kommt es bei deren Herstellung zu optischen Defekten wie Blitzfiguren, Schrumpfmarkierungen und Verprägungen.

3. Die Verarbeitbarkeit der Folie ist verschlechtert. Die hohe statische Aufladung der Folie führt zu Problemen beim Abwickeln und bei ihrer Verarbeitung auf Verpackungsmaschinen zu Materialstau.

Aufgabe der vorliegenden Erfindung war es daher, ein Verfahren zur Oberflächenbehandlung einer Folie bereitzustellen, nach dem eine Polypropylenfolie mit guten Siegeleigenschaften und gutem antistatischen Verhalten hergestellt werden kann.

Gelöst wird diese Aufgabe durch ein Verfahren der eingangs genannten Gattung, dessen kennzeichnende Merkmale darin bestehen, daß

a) eine Folie über eine Kühlwalze (4) geführt wird und

b) oberhalb dieser Kühlwalze (4) ein Brenner (1) angebracht ist und

c) mittels dieses Brenners (1) eine nicht polarisierte Flamme erzeugt wird und

d) die Folie über die Kühlwalze (4) und gegebenenfalls über zusätzliche Kühlvorrichtungen derartig abgekühlt wird, daß die Temperatur der flammbehandelten Folienoberfläche beim Verlassen der Kühlwalze (4) höchstens 25 °C beträgt.

Überraschenderweise werden bei dem erfindungsgemäßen Verfahren Siegeleigenschaften der vorbehandelten Oberfläche erreicht, die nahezu so gut sind wie die einer nicht vorbehandelten Folienoberfläche. Dies ist umso erstaunlicher, da nach dem Stand der Technik die Wärmeentwicklung bei der Flammbehandlung ohne Polarisation höher ist als bei der Flammbehandlung mit Polarisation. Vermutlich werden bei dem erfindungsgemäßen Verfahren die durch die hohe Wärmeentwicklung in der Siegelschicht initiierten Abbaureaktionen durch die schnelle Abkühlung sofort gestoppt, so daß keine die Siegelfähigkeit herabsetzende Materialschädigung auftreten kann.

Es gibt mehrere technische Möglichkeiten, die Folie bei der Flammbehandlung schnellstmöglich abzukühlen. Es bietet sich an, die Kühlwalze (4) derartig zu kühlen, daß ihre Oberflächentemperatur deutlich unterhalb der angegebenen Folientemperatur von 25 °C liegt. Um eine Folientemperatur von weniger als 25 °C direkt nach Verlassen der Kühlwalze (4) zu erhalten, wird die Kühlwalzenoberfläche bevorzugt auf einer Temperatur unterhalb von 20 °C, insbesondere unterhalb einer Temperatur von 17 °C, ganz bevorzugt unterhalb einer Temperatur von 14 °C gehalten. Die Temperatur des Kühlmediums in der Kühlwalze (4) beträgt bevorzugt weniger als 15 °C, insbesondere weniger als 12 °C, ganz bevorzugt weniger als 9 °C. Das Kühlmedium im Innern der Walze ist dabei bevorzugt rückgekühltes Wasser oder ein anderes geeignetes Kältemittel wie z. B. Frigen.

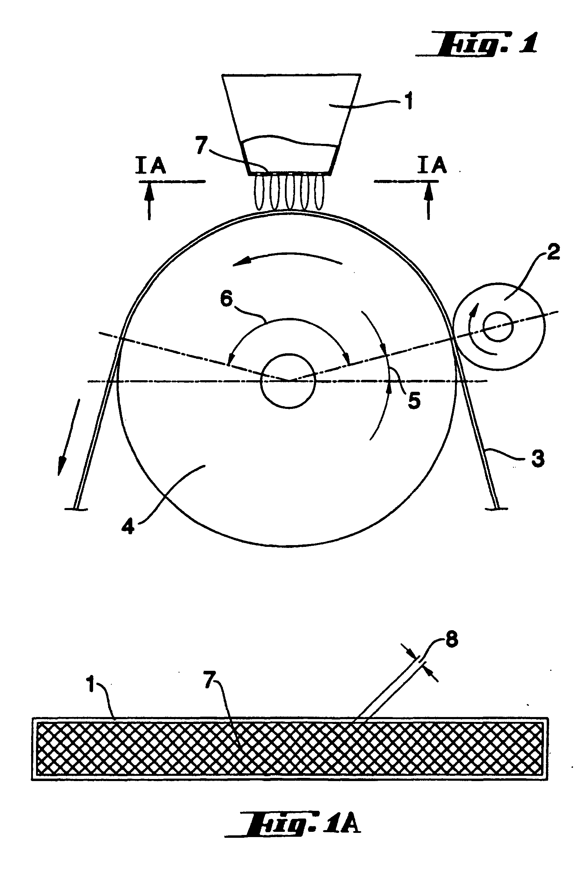

Im einzelnen haben sich bei der Prozeßführung folgende Bedingungen als günstig herausgestellt (Figur 1 ): Die Kühlwalze (4), auf der die Folie flammbehandelt wird, hat in der bevorzugten Ausführungsform einen Durchmesser von 200 bis 600 mm, insbesondere 300 bis 500 mm. Der Durchmesser der Anlege-/Nipwalze (2) beträgt in der bevorzugten Ausführungsform 150 bis 450 mm, insbesondere 200 bis 400 mm. Der Anlegewinkel (5) beträgt in der bevorzugten Ausführungsform 10 bis 40°, er kann aber auch größer ausgeführt werden. Der Brenner (1) hat in der bevorzugten Ausführungsform ein GitterNetz (7) mit einer Maschenweite (8) von 2 bis 15 mm, insbesondere 3 bis 10 mm (vgl. Figur 1A, Ansicht IA-IA). Die Temperatur der Flamme beträgt in einem bevorzugten Bereich 650 bis 850 °C, insbesondere 700 bis 800 °C. Der Gasdurchsatz richtet sich u. a. nach dem zu behandelnden Polymeren der Folienoberfläche, der Folienbahnbreite und der Folienbahngeschwindigkeit. Ein bevorzugter Bereich für den Gasdurchsatz/Folienbahnbreite ist 20 bis 60 Nm$^3$/h·m, insbesondere 30-50 Nm$^3$/h·m. Der Umschlingungswinkel (6) der Folie auf der Walze beträgt in einem bevorzugten Bereich 120 bis 200°, insbesondere 130 bis 180°. Die Maschinengeschwindigkeit kann je nach Folientyp in einem weiten Bereich variieren, wobei der Vorzugsbereich innerhalb von 50 und 500 m/min, insbesondere innerhalb von 80 und 450 m/min, liegt.

In einer bevorzugten Ausgestaltung der Erfindung wird die flammbehandelte Folienoberfläche zusätzlich abgekühlt. Dies kann kurz vor der Flammbehandlung, bei der Flammbehandlung und/oder kurz danach erfolgen. Folgende technische Ausführungen haben sich praktisch bewährt:

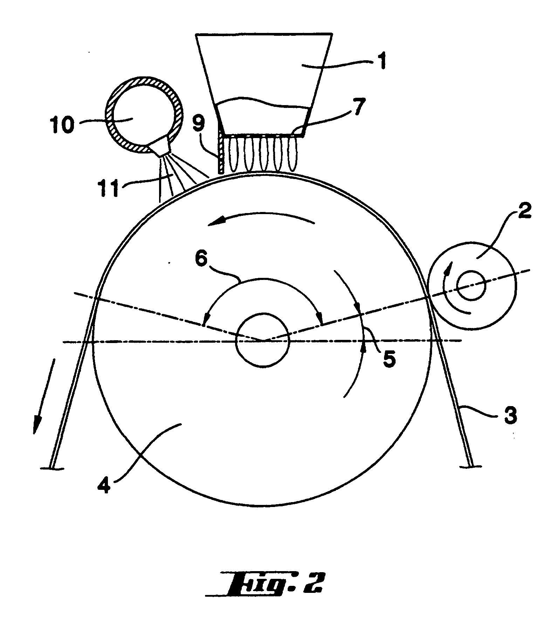

• Besprühen oder Anblasen der Folienoberfläche mittels eine Sprührohrs (10) mit einem geeigneten Kühlmittel (Figur 2).

Geeignete Kühlmittel sind z. B. Wasser und/oder Luft. Eine sehr schnelle Abkühlung der Folienoberfläche wird durch Besprühen der Folie mit einem feinen Wassernebel (11) erzielt, der durch geeignet geformte Düsen erzeugt wird. Eine Beeinträchtigung des Prozesses ist hierbei nicht gegeben. Der auf der Folie niedergeschlagene Wasserfilm verdunstet, oder er wird mittels Luft weggeblasen. Eine andere technische Variante besteht darin, die Folienoberfläche direkt mit Luft unter Zuhilfenahme eines Luftmessers intensiv anzublasen. In diesem Fall muß die Flamme z. B. über ein geeignetes Blech gegen den Luftstrom (13) abgeschirmt werden. Die beschriebenen Verfahren werden direkt nach und/oder vor der Flammbehandlung angewendet.

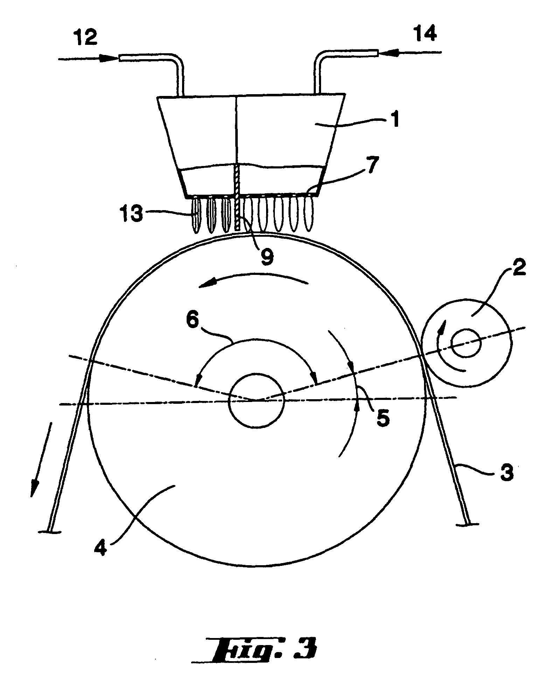

• Unterteilung des Brenners (1) in mehrere strömungstechnisch getrennte Abschnitte, die mit unterschiedlichen Medien durchströmt werden (vgl. Figur 3). In der Figur ist die Aufteilung des Brenners (1) in zwei getrennte Kammern dargestellt. In die vordere Kammer des Brenners (1) strömt über eine entsprechende Zuleitung das Gasgemisch (14) (z. B. Propan oder Stadtgas mit Umgebungsluft gemischt), das über ein feines Maschennetz/Gitter (7) nach außen gelangt. Eine typische Maschenweite (8) ist 5 mm, und eine typische Gitterlänge in Maschinenrichtung ist 30 mm (vgl. auch Figur 1 A, Ansicht "IA-IA"). Die Anzahl der erzeugten Flammen wird durch die Maschenweite, Länge des Gitters in Maschinenrichtung und die Brennerbreite bestimmt. Durch die zweite, dahinterliegende Kammer wird die Kühlluft (12) oder ein anderes Kühlmedium geführt. Um eine hohe Strömungsgeschwindigkeit der Luft relativ zur Folie zu erreichen, ist eine feine Aufteilung des Gitters erforderlich. Bewährt haben sich Maschen-/Gitterweiten von ca. 0, 5 bis 3 mm. Bei Anwendung dieses Konzeptes ist es bevorzugt, eine geeignete Abschirmung (9) der Flamme in den Brenner (1) zu integrieren, z. B. ein höhenverstellbares Blech.

Es wurde weiterhin gefunden, daß die Siegeleigenschaften im wesentlichen vom Grad der Folienabkühlung abhängig sind. Überraschenderweise hat sich gezeigt, daß der Grad der Abkühlung direkt mit der Mindestsiegeltemperatur (MST) der Deckschicht der Folie verknüpft werden kann. Danach gilt für eine

- MST von 100 bis 130 °C, daß die Temperatur der flammbehandelten Oberfläche der Folie direkt nach Verlassen der Kühlwalze (4) kleiner als 25 °C sein muß, und für eine

- MST von 70 bis 100 °C, daß die Temperatur der flammbehandelten Oberfläche der Folie direkt nach Verlassen der Kühlwalze (4) kleiner als 20 °C sein muß.

Es war sehr überraschend, daß allein durch Anwendung des erfindungsgemäßen Verfahrens die flammbehandelte Siegelschicht in ihrer Siegelfähigkeit nicht oder nur unwesentlich beeinträchtigt wird. Weiterhin war sehr überraschend, daß keine oder nur eine sehr geringe Kondensation an der Filmoberfläche auftritt. Die Kondensation ist dabei so gering, daß keine zusätzlichen Problemen auftreten. In der Regel ist das an der Filmoberfläche kondensierte Wasser bereits nach einem Transportweg von 1 bis 2 m verdunstet.

Ein weiterer großer Vorteil in der Anwendung des erfindungsgemäßen Verfahrens besteht darin, daß die Folie nicht statisch aufgeladen wird. Ein einwandfreies Handling und eine einwandfreie Weiterverarbeitung der Folie ist uneingeschränkt möglich. Die Folie läßt sich problemlos abwickeln.

Vorzugsweise ist die Folie mehrschichtig und weist auf ihrer Basisschicht mindestens eine siegelfähige Deckschicht auf. In einer besonderen Ausführungsform weist die Folie auf ihrer Basisschicht beidseitig Deckschichten auf. In einer weiteren Ausführungsform weist die Folie auf ihrer Basisschicht mindestens eine, gegebenenfalls beidseitig Zwischenschicht/en auf.

Die Basisschicht der Folie enthält im allgemeinen mindestens 85 Gew.-%, vorzugsweise 90 bis 99 Gew.-%, jeweils bezogen auf die Basisschicht, eines nachstehend beschriebenen Propylenhomopolymeren und gegebenenfalls zugesetzte Additive in jeweils wirksamen Mengen.

Das Propylenhomopolymere der Basisschicht hat einen Schmelzpunkt von 140 bis 165 °C, vorzugsweise 155 bis 162 °C, und einen Schmelzflußindex (Messung DIN 53 735 bei 21,6 N Belastung und 230 °C) von 1,0 bis 10 g/10 min, vorzugsweise von 1,5 bis 6 g/10 min. Der n-heptanlösliche Anteil des Polymeren beträgt im allgemeinen 1 bis 10 Gew.-%, bezogen auf das Ausgangspolymere. Der n-heptanunlösliche Anteil des Propylenhomopolymeren ist isotaktisch. Der mittels $^{13}$C-NMR-Spektroskopie bestimmte Kettenisotaxieindex beträgt mehr als 85 %, vorzugsweise mehr als 90 %.

Ist die Folie opak, so enthält die Basisschicht zusätzlich vakuoleninitiierende Substanzen, z. B. $CaCO_3$, oder unverträgliche Polymere, wie sie im Stand der Technik beschrieben werden.

Die Molekulargewichtsverteilung des Propylenhomopolymeren kann je nach Anwendungsgebiet in breiten Grenzen variieren. Das Verhältnis des Gewichtsmittels $M_w$ zum Zahlenmittel $M_n$ liegt im allgemeinen zwischen 2 und 15.

In einer bevorzugten Ausführungsform der erfindungsgemäßen Folie liegt das Verhältnis des Gewichtsmittels $M_w$ zum Zahlenmittel $M_n$ bei 2 bis 6, ganz gesonders bevorzugt bei 3 bis 5. Eine derart enge Molekulargewichtsverteilung des Propylenhomopolymeren der Basisschicht erreicht man durch dessen peroxidischen Abbau.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ =    Schmelzflußindex des Propylenpolymeren vor dem Zusatz des organischen Peroxids

$MFI_2$ =    Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10. Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Gegebenenfalls können zusätzlich herkömmliche Kohlenwasserstoffharze der Basisschicht zugesetzt werden. Harze sind niedermolekulare Polymere, deren Molekulargewicht im allgemeinen in einem Bereich von 200 bis 10 000, vorzugsweise 300 bis 8 000, insbesondere 400 bis 5 000, liegt. Damit ist das Molekulargewicht des Harzes deutlich niedriger als das der Propylenpolymeren, welche im allgemeinen ein Molekulargewicht von über 100 000 haben. Der Erweichungspunkt des Harzes liegt zwischen 60 und °C (gemessen nach DIN 1995-U4, entspricht ASTM E-28). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyclopädie der techn. Chemie, 4. Auflage, Band 12, Seiten 525 bis 555, beschrieben).

Als Harze sind insbesondere die Kohlenwasserstoffharze bevorzugt. Die Kohlenwasserstoffharze können teilweise oder vollständig hydriert sein. Als Harze kommen grundsätzlich synthetische Harze oder Harze natürlichen Ursprungs in Frage. Es hat sich als besonders vorteilhaft erwiesen, Harze mit einem Erweichungspunkt von größer 60 °C einzusetzen, wobei solche mit einem Erweichungspunkt von 70 bis 180 °C, insbesondere 80 bis 160 °C, bevorzugt sind.

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden. Die Terpenharze sind Polymerisate von Terpenen, d. h. Kohlenwasserstoffen der Formen $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produktes, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 110 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 120 °C und höher oder Copolymerisate aus $\alpha$-Methylstyrol und Vinyltoluol mit einem Erweichungspunkt von 100 bis 180 °C.

Darüber hinaus kann die Basisschicht zusätzlich übliche Additive wie Antistatika, Antiblockmittel, Gleitmittel, Stabilisatoren, Neutralisationsmittel und/oder Nukleierungsmittel in jeweils wirksamen Mengen enthalten. Die nachstehend genannten Gewichtsangaben beziehen sich auf die Basisschicht.

Bevorzugte Antistatika sind Alkalialkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren wird Glycerinmonostearat in einer Menge von 0,03 bis 0, 5 Gew.-% bevorzugt als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm²/s. Besonders günstig ist der Zusatz der Polydimethylsiloxane in die nicht vorzubehandelnde Deckschicht und/oder in eine oder beide Zwischenschicht/en.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 $m^2$/g.

Die nach dem erfindungsgemäßen Verfahren hergestellte Polypropylenfolie umfaßt im allgemeinen mindestens eine siegelfähige, vorzugsweise beidseitig siegelfähige Deckschicht/en aus Polymeren aus Olefinen mit 2 bis 10 Kohlenstoffatomen. Im allgemeinen enthält die Deckschicht 90 bis 100 Gew.-%, vorzugsweise 98 bis 100 Gew.-%, der olefinischen Polymeren, jeweils bezogen auf das Gewicht der Deckschicht.

Beispiele für derartige olefinische Polymere sind

ein Copolymer aus

Ethylen und Propylen oder

Ethylen und Butylen-1 oder

Propylen und Butylen-1 oder

ein Terpolymer aus

Ethylen und Propylen und Butylen-1 oder

eine Mischung aus zwei oder mehreren der genannten Homo-, Co- und Terpolymeren oder

ein Blend aus zwei oder mehreren der genannten Homo-, Co- und Terpolymeren, gegebenenfalls gemischt mit einem oder mehreren der genannten Homo-, Co- und Terpolymeren,

wobei insbesondere statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%, jeweils bezogen auf das Gesamtgewicht des Copolymeren, oder

statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 2 bis 30 Gew.-%, bevorzugt 4 bis 20 Gew.-%,

jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

jeweils bezogen auf das Gesamtgewicht des Polymerblends,

bevorzugt sind.

Das in der Deckschicht eingesetzte Propylenhomopolymere enthält mindestens 90 % Propylen und besitzt einen Schmelzpunkt von 140 °C oder höher, vorzugsweise 150 bis 170 °C, wobei isotaktisches Homopolypropylen bevorzugt ist. Das Homopolymere hat im allgemeinen einen Schmelzflußindex von 1, 5 bis 20 g/10 min, vorzugsweise 2,0 bis 15 g/10 min.

Die in der Deckschicht eingesetzten vorstehend beschriebenen Copolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Die in der Deckschicht eingesetzten Terpolymeren haben einen Schmelzflußindex im Bereich von 1,5 bis 30 g/10 min, vorzugsweise von 3 bis 15 g/10 min, und einen Schmelzpunkt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können die Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

Gegebenenfalls können die Deckschichten Antistatika, Antiblockmittel, Gleitmittel, Neutralisationsmittel, Stabilisatoren und die vorstehend beschriebenen Harze enthalten. Die genannten Mengenangaben beziehen sich auf die Deckschicht/en. Bevorzugt enthält die Deckschicht, die mit Flamme behandelt wird, kein Polydialkylsiloxan inkorporiert.

In einer anderen bevorzugten Ausführungsform kann/können auch eine oder mehrere Zwischenschicht/en zwischen der Basis- und der/den Deckschicht/en aufgebracht werden. Die Zwischenschicht/en kann/können aus den für die Deckschichten beschriebenen Polymeren bestehen. In einer besonders bevorzugten Ausführungsform besteht/ bestehen die Zwischenschicht/en aus dem für die Basisschicht beschriebenen Propylenhomopolymeren. Die Zwischenschichten können die für die Deckschichten üblichen Additive enthalten.

Die Dicke der Deckschichten ist größer als 0,1 bis 5 μm und liegt vorzugsweise im Bereich von 0,2 bis 1,5 μm, insbesondere 0,3 bis 1,0 μm, wobei die Deckschichten gleich oder verschieden dick sein können.

Die Dicke der Zwischenschicht/en ist größer als 0,1 μm und liegt vorzugsweise im Bereich von 0,5 bis 15 μm, insbesondere 0,7 bis 10 μm.

Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 120 μm, insbesondere 5 bis 100 μm, vorzugsweise 6 bis 80 μm, wobei die Basisschicht etwa 40 bis 100 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird so vorgegangen, daß die den einzelnen Schichten der Folie entsprechenden Schmelzen durch eine Breitschlitzdüse coextrudiert werden, der so erhaltene Schmelzefilm zur Verfestigung auf einer oder mehreren Walze/n abgezogen wird, die Folie anschließend mindestens monoaxial, vorzugsweise biaxial, gestreckt, thermofixiert und flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst werden, wie beim Coextrusionsverfahren üblich, die Polymeren bzw. die Polymermischungen der einzelnen Schichten in Extrudern komprimiert und verflüssigt, wobei die gegebenenfalls zugesetzten Additive bereits in den Polymeren bzw. in den Polymermischungen enthalten sein können. Die Schmelzen werden dann gleichzeitig durch eine Breitschlitzdüse gepreßt, und der ausgepreßte mehrschichtige Schmelzefilm wird auf einer oder mehreren Abzugswalzen abgezogen, wobei er abkühlt und sich verfestigt. Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckverhältnisse liegen im Bereich von 4,5 bis 9, vorzugsweise 5,5 bis 8,5, und die Querstreckverhältnisse im Bereich von 7 bis 12, vorzugsweise 8 bis 11.

An die biaxiale Streckung der Folie schließt sich ihre Thermofixierung (Wärmebehandlung) an, wobei die Folie etwa 0,1 bis 10 s lang bei einer Temperatur von 80 bis 160 °C gehalten wird. Danach erfolgt die erfindungsgemäße Flammbehandlung der Folie. Die Behandlungsintensität liegt im allgemeinen im Bereich von 36 bis 50 mN/m, vorzugsweise 38 bis 45 mN/m. Die so hergestellte Folie wird in üblicher Weise mit einer Aufwickeleinrichtung aufgewickelt.

Es hat sich als besonders günstig erwiesen, die Abzugswalze oder -walzen, durch die der ausgepreßte Schmelzefilm abgekühlt und verfestigt wird, durch einen Heiz- und Kühlkreislauf bei einer Temperatur von 10 bis 100 °C, vorzugsweise 20 bis 70 °C, zu halten.

Die Temperaturen, bei denen die Längs- und die Querstreckung durchgeführt werden, können in einem relativ großen Bereich variieren und richten sich nach der jeweiligen Zusammensetzung der einzelnen Schichten und nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Die nach dem erfindungsgemäßen Verfahren hergestellte Folie eignet sich insbesondere für schnellaufende Verpackungsmaschinen. Sie besitzt all die wichtigen Eigenschaften, die von Polypropylenfolien im Hinblick auf den Einsatz auf schnellaufenden Verpackungsmaschinen gefordert werden. Sie weist insbesondere eine gute Siegelbarkeit, eine geringe statische Aufladung, hervorragende Laufeigenschaften und gleichzeitig eine gute Bedruckbarkeit auf.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Molekulargewichtsbestimmung

Zur Bestimmung des mittleren Molekulargewichts wird die Drei-Detektor-Gelpermeationschromatographie verwendet. Die Substanz wird in einem Laufmittel wie THF aufgelöst und über eine Trennsäule gegeben. Die Trennsäule ist 90 cm lang und mit einem porösen Trägermaterial gefüllt, dessen Porengröße 5 μm beträgt. Die Detektion erfolgt mittels UV-Absorptionsspektroskopie bei verschiedenen Wellenlängen sowie mittels Brechungsindex und Lichtstreuvermögen der Fraktionen. Die Kalibrierung wird über eine Standardverbindung mit bekanntem Molekulargewicht durchgeführt. Der Vergleich der UV-Absorption der Standardsubstanz mit der Absorption der Probe ermöglicht die Zuordnung der Molekulargewichte.

Bestimmung der Mindestsiegeltemperatur (MST)

Die Mindestsiegeltemperatur wird mit der peel-Methode bestimmt. Mit dem Siegelgerät HSG/ET der Firma Brugger werden heißgesiegelte Proben (Siegelnaht 20 mm $\times$ 150 mm) hergestellt, indem eine Folie bei unterschiedlichen Temperaturen mit Hilfe zweier beheizter Siegelbacken bei einem Siegeldruck von 15 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet.
Die Mindestsiegeltemperatur (oder die minimale Siegeltemperatur) ist die Temperatur, bei der eine Siegelnahtfestigkeit von 0,5 N/15 mm erreicht wird.
Daneben wurde - ebenfalls nach der peel-Methode - die Zerreißkraft bei 130 °C Siegeltemperatur gemessen.

Statische Aufladung der Folie

Die statische Aufladung der Folie wird bei der Herstellung direkt nach Verlassen der Kühlwalze mit dem Influenz-Feldmeter EMF 57 der Fa. Eltex beurteilt. Gemessen wird dabei die Feldstärke auf der Folienoberfläche über die Breite der Folienbahn. Das statische Verhalten der Folie ist akzeptabel, wenn nach der Kühlwalze die Erhöhung der Feldstärke nicht mehr als 10 KV/m beträgt.

Messung der Folienoberflächentemperatur

Die Messung der Folienoberflächentemperatur erfolgt mittels IR-Meßgerät.

Messung der Flammtemperatur

Aus dem Gas- oder Luftstrom (13) wird eine kleine Menge abgezweigt und damit eine Vergleichsflamme gebildet. An dieser Vergleichsflamme wird mit einem Widerstandsthermometer die Flammtemperatur gemessen.
Die Erfindung wird nun anhand von Ausführungsbeispielen noch näher erläutert.

Beispiel 1

Es wurde durch Coextrusion und anschließende stufenweise Orientierung in Längs- und in Querrichtung eine transparente dreischichtige Folie mit symmetrischem Aufbau mit einer Gesamtdicke von 20 μm hergestellt. Die Deckschichten hatten eine Dicke von jeweils 0,6 μm.

| A-Basisschicht: | |
| --- | --- |
| 99,70 Gew.-% | isotaktisches Polypropylen der Fa. Solvay mit dem Markennamen ®Eltex PHP 405 |
| 0,15 Gew.-% | N,N-bis-ethoxyalkylamin |
| 0,15 Gew.-% | Erucasäureamid |

| B-Deckschichten: | |
|---|---|
| 99,67 Gew.-% | statistisches Ethylen-Propylen-Copolymeres mit einem $C_2$-Gehalt von 4,5 Gew.-% |
| 0,33 Gew.-% | SiO$_2$ als Antiblockmittel mit einer mittleren Teilchengröße von 4 µm |

Die Herstellungsbedingungen in den einzelnen Verfahrensschritten sind:

| Extrusion | Temperaturen: | A-Schicht | 280 °C |
|---|---|---|---|
| | | B-Schichten | 280 °C |
| | Temperatur der Abzugswalze | | 30 °C |
| Längsstreckung | Temperatur | | 130 °C |
| | Längsstreckverhältnis | | 5 |
| Querstreckung | Temperatur | | 160 °C |
| | Querstreckverhältnis | | 10 |
| Fixierung | Temperatur | | 140 °C |
| | Konvergenz | | 15 % |

Eine der Folienseiten (D-Seite) wurde mit Flamme druckvorbehandelt. Die wesentlichen Parameter bei der Vorbehandlung waren:

| Folienbahngeschwindigkeit | 230 m/min |
|---|---|
| Folienbahnbreite | 5 m |
| Gasdurchsatz | 170 m$^3$/h |
| Flammtemperatur | 750 °C |
| Spaltweite Brenner/Kühlwalze | 4 mm |
| Kühlwalzentempertur im Innern | 10 °C |
| Kühlwalzenoberflächentemperatur | 19 °C |
| Folientemperatur direkt nach Kühlwalze | 23 °C |

Als Gas wurde übliches Stadtgas verwendet. Die erzielten Folieneigenschaften gibt die Tabelle wieder. Bei obigen Verfahrensdaten beträgt die Oberflächenspannung der flammbehandelten Seite 39 N/mm.

Beispiel 2

Im Vergleich zu Beispiel 1 wurde in den Deckschichten anstelle des statistischen Copolymeren ein statistisches Ethylen-Propylen-Butylen-Terpolymeres mit einem $C_2$-Gehalt von 3 Gew.-% und einem $C_4$-Gehalt von 8 Gew.-% verwendet. Die geänderten Parameter bei der Vorbehandlung waren:

| Kühlwalzentempertur im Innern | 8 °C |
|---|---|
| Kühlwalzenoberflächentemperatur | 17 °C |
| Folientemperatur direkt nach Kühlwalze | 21 °C |

**Beispiel 3**

Im Vergleich zu Beispiel 1 wurde in den Deckschichten anstelle des statistischen Copolymeren das niedrigsiegelnde Tafmer XR 106 L (Reaktorblend aus $C_2C_3C_4$ und $C_3C_4$) verwendet. Die geänderten Parameter bei der Vorbehandlung waren:

| Kühlwalzentempertur im Innern | 3 °C |
|---|---|
| Kühlwalzenoberflächentemperatur | 12 °C |
| Folientemperatur direkt nach Kühlwalze | 15 °C |

Beispiel 4

Im Vergleich zu Beispiel 1 wurde zusätzlich direkt nach der Flammbehandlung die Folienoberfläche über ein Sprührohr (10) mit Wassernebel (11) besprüht (vgl. Fig. 1).

Vergleichsbeispiel 1

Im Vergleich zu Beispiel 1 wurde jetzt die Flammbehandlung mit Polarisation durchgeführt.

Vergleichsbeispiel 2

Im Vergleich zu Beispiel 1 wurde jetzt die Flammbehandlung bei einer Kühlwalzentemperatur von 40 °C durchgeführt. Die D-Seite ist nicht mehr siegelfähig.

Vergleichsbeispiel 3

Im Vergleich zu Beispiel 1 wurde jetzt die Flammbehandlung mit einer Brenneranordnung unterhalb der Kühlwalze (4) durchgeführt. Hierbei tritt in unzulässiger Weise Kondensatbildung auf.

**Patentansprüche**

1. Verfahren zur Behandlung einer siegelfähigen Folienoberfläche mittels Flamme, **dadurch gekennzeichnet, daß**

   a) eine Folie über eine Kühlwalze (4) geführt wird und
   b) oberhalb dieser Kühlwalze (4) ein Brenner (1) angebracht ist und
   c) mittels dieses Brenners (1) eine nicht polarisierte Flamme erzeugt wird und
   d) die Folie über die Kühlwalze (4) und gegebenenfalls über zusätzliche Kühlvorrichtungen derartig abgekühlt wird, daß die Temperatur der flammbehandelten Folienoberfläche beim Verlassen der Kühlwalze (4) höchstens 25 °C beträgt.

2. Verfahren nach Anspruch 1, **dadurch gekennzeichnet, daß** die Temperatur der Kühlwalzenoberfläche weniger als 20 °C, vorzugsweise weniger als 17 °C, beträgt.

3. Verfahren nach Anspruch 1 und/oder 2, **dadurch gekennzeichnet, daß** die Kühlwalze (4) mit Wasser oder Frigen als Kühlmedium gekühlt wird, wobei das Kühlmedium eine Temperatur von weniger als 15 °C, vorzugsweise weniger als 12 °C, hat.

4. Verfahren nach einem oder mehreren der Ansprüche 1 bis 3, **dadurch gekennzeichnet, daß** die nicht polarisierte Flamme eine Temperatur im Bereich von 650 bis 850 °C, vorzugsweise 700 bis 800 °C, hat.

5. Verfahren nach einem oder mehreren der Ansprüche 1 bis 4, **dadurch gekennzeichnet, daß** die zusätzliche Kühlung durch Besprühen der Folie mit einem geeigneten Kühlmittel erfolgt.

6. Verfahren nach einem oder mehreren der Ansprüche 1 bis 5, **dadurch gekennzeichnet, daß** das Kühlmittel Luft oder Wassernebel (11) ist.

7. Verfahren nach einem oder mehreren der Ansprüche 1 bis 6, **dadurch gekennzeichnet, daß** der Brenner (1) mindestens zwei getrennte Kammern aufweist und durch einen Teil der Kammern das zu verbrennende Gasgemisch (14) strömt und durch die verbleibenden Kammern ein Kühlmedium strömt.

8. Verfahren nach einem oder mehreren der Ansprüche 1 bis 7, **dadurch gekennzeichnet, daß** die durch Verbrennung des Gasgemischs erzeugte Flamme durch einen flächenhaften Formkörper gegenüber dem strömenden Kühlmedium abgeschirmt wird.

9. Verfahren nach einem oder mehreren der Ansprüche 1 bis 8, **dadurch gekennzeichnet, daß** die siegelfähige Folienoberfläche eine Mindestsiegeltemperatur von 100 bis 130 °C aufweist und die Temperatur der Folienoberfläche beim Verlassen der Kühlwalze (4) kleiner als 25 °C ist.

10. Verfahren nach einem oder mehreren der Ansprüche 1 bis 8, **dadurch gekennzeichnet, daß** die siegelfähige Folienoberfläche eine Mindestsiegeltemperatur von 70 bis < 100 °C aufweist und die Temperatur der Folienoberfläche beim Verlassen der Kühlwalze (4) kleiner als 20 °C ist.

11. Verfahren nach einem oder mehreren der Ansprüche 1 bis 10, **dadurch gekennzeichnet, daß** die Folie mehrschichtig ist und eine Basisschicht und mindestens eine siegelfähige Deckschicht aufweist.

12. Verfahren nach einem oder mehreren der Ansprüche 1 bis 11, **dadurch gekennzeichnet, daß** die Basisschicht 90 bis 99 Gew.-% eines Propylenpolymeren enthält und die Deckschicht 90 bis 100 Gew.-% olefinische Polymere mit 2 bis 10 Kohlenstoffatomen enthält.

13. Verfahren nach einem oder mehreren der Ansprüche 1 bis 12, **dadurch gekennzeichnet, daß** die olefinischen Polymeren ein Copolymer aus
    Ethylen und Propylen oder
    Ethylen und Butylen-1 oder
    Propylen und Butylen-1 oder
ein Terpolymer aus
    Ethylen und Propylen und Butylen-1 oder
eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,
sind.

14. Verfahren nach einem oder mehreren der Ansprüche 1 bis 13, **dadurch gekennzeichnet, daß** die Deckschicht 0,1 bis 5 µm, vorzugsweise 0,2 bis 1,5 µm, dick ist.

15. Verfahren zur Herstellung einer Folie, bei welchem die den einzelnen Schichten der Folie entsprechenden Schmelzen durch eine Breitschlitzdüse coextrudiert werden, der so erhaltene Schmelzefilm zur Verfestigung auf einer oder mehreren Walze/n abgezogen wird, die Folie anschließend mindestens monoaxial, vorzugsweise biaxial, gestreckt, thermofixiert und flammbehandelt wird, **dadurch gekennzeichnet, daß** sie nach einem Verfahren gemäß Anspruch 1 flammbehandelt wird.

16. Verwendung einer Folie hergestellt nach dem Verfahren gemäß Anspruch 16 als Verpackungsfolie.


**Claims**

1. Process for the flame treatment of a heat-sealable film surface, **characterized in that**

    a) a film is passed over a chill roll (4) and
    b) a burner (1) is installed above this chill roll (4) and
    c) an unpolarized flame is generated by means of this burner (1) and
    d) the film is cooled via the chill roll (4) and, if necessary, via additional chill devices in such a way that the temperature of the flame-treated film surface on leaving the chill roll (4) is at most 25°C.

2. Process according to Claim 1, **characterized in that** the temperature of the chill-roll surface is below 20°C, preferably below 17°C.

3. Process according to Claim 1 and/or 2, **characterized in that** the chill roll (4) is cooled using water or Frigen as cooling medium, where the cooling medium has a temperature of below 15°C, preferably below 12°C.

4. Process according to one or more of Claims 1 to 3, **characterized in that** the unpolarized flame has a temperature in the range from 650 to 850°C, preferably from 700 to 800°C.

5. Process according to one or more of Claims 1 to 4, **characterized in that** the additional cooling is carried out by spraying the film with a suitable coolant.

6. Process according to one or more of Claims 1 to 5, **characterized in that** the coolant is air or water mist (11).

7. Process according to one or more of Claims 1 to 6, **characterized in that** the burner (1) has at least two separate chambers, and the gas mixture (14) to be burnt flows through some of the chambers and a cooling medium flows through the remaining chambers.

8. Process according to one or more of Claims 1 to 7, **characterized in that** the flame generated by burning the gas mixture is screened from the flowing cooling medium by means of a two-dimensional moulding.

9. Process according to one or more of Claims 1 to 8, **characterized in that** the heat-sealable film surface has a minimum heat-sealing temperature of from 100 to 130°C, and the temperature of the film surface on leaving the chill roll (4) is below 25°C.

10. Process according to one or more of Claims 1 to 8, **characterized in that** the heat-sealable film surface has a minimum heat-sealing temperature of from 70 to < 100°C, and the temperature of the film surface on leaving the chill roll (4) is below 20°C.

11. Process according to one or more of Claims 1 to 10, **characterized in that** the film is multilayered and has a base layer and at least one heat-sealable top layer.

12. Process according to one or more of Claims 1 to 11, **characterized in that** the base layer comprises from 90 to 99% by weight of a propylene polymer, and the top layer comprises from 90 to 100% by weight of olefinic polymers having from 2 to 10 carbon atoms.

13. Process according to one or more of Claims 1 to 12, **characterized in that** the olefinic polymers are a copolymer comprising

    ethylene and propylene or
    ethylene and 1-butylene or
    propylene and 1-butylene or
a terpolymer comprising
    ethylene and propylene and 1-butylene or
a mixture of two or more of the said homopolymers, copolymers and terpolymers or
a blend of two or more of the said homopolymers, copolymers and terpolymers, if desired mixed with one or more of the said homopolymers, copolymers and terpolymers.

14. Process according to one or more of Claims 1 to 13, **characterized in that** the top layer has a thickness of from 0.1 to 5 μm, preferably from 0.2 to 1.5 μm.

15. Process for the production of a film, in which the melts corresponding to the individual layers of the film are coextruded through a slot die, the resultant melt film is taken off on one or more roll(s) for solidification, the film is subsequently stretched at least monoaxially, preferably biaxially, heat-set and flame-treated, **characterized in that** it is flame-treated by a process according to Claim 1.

16. Use of a film produced by the process according to Claim 15 as packaging film.


**Revendications**

1. Procédé destiné au traitement d'une surface de film thermoscellable au moyen d'une flamme, **caractérisé en ce que**

    a) un film est conduit sur un rouleau refroidisseur (4) et

b) au-dessus de ce rouleau refroidisseur (4) est disposé un brûleur (1) et

c) au moyen de ce brûleur (1) est produite une flamme non polarisée et

d) le film est refroidi par le rouleau refroidisseur (4) et le cas échéant par d'autres dispositifs de refroidissement, de telle manière que la température de la surface du film traitée à la flamme s'élève à tout au plus 25 °C à la sortie du rouleau refroidisseur (4).

2. Procédé selon la revendication 1, **caractérisé en ce que** la température de la surface du rouleau refroidisseur s'élève à moins de 20 °C, de préférence à moins de 17 °C.

3. Procédé selon la revendication 1 et/ou 2, **caractérisé en ce que** le rouleau refroidisseur (4) est refroidi avec de l'eau ou du fréon en tant qu'agent de refroidissement, l'agent de refroidissement ayant une température de moins de 15 °C, de préférence de moins de 12 °C.

4. Procédé selon l'une ou plusieurs des revendications 1 à 3, **caractérisé en ce que** la flamme non polarisée a une température dans une plage de 650 à 850 °C, de préférence de 700 à 800 °C.

5. Procédé selon l'une ou plusieurs des revendications 1 à 4, **caractérisé en ce que** le refroidissement additionnel se produit par pulvérisation sur le film d'un agent de refroidissement approprié.

6. Procédé selon l'une ou plusieurs des revendications 1 à 5, **caractérisé en ce que** l'agent de refroidissement est de l'air ou un brouillard d'eau (11).

7. Procédé selon l'une ou plusieurs des revendications 1 à 6, **caractérisé en ce que** le brûleur (1) présente au moins deux chambres séparées et que le mélange de gaz devant être consumé (14) passe à travers une partie des chambres et l'agent de refroidissement passe à travers les chambres restantes.

8. Procédé selon l'une ou plusieurs des revendications 1 à 7, **caractérisé en ce que** la flamme produite par la combustion du mélange de gaz est protégée par un corps de forme plane contre l'agent de refroidissement qui est débité.

9. Procédé selon l'une ou plusieurs des revendications 1 à 8, **caractérisé en ce que** la surface du film thermoscellable présente une température de scellage minima de 100 à 130 °C et la température de la surface du film à la sortie du rouleau refroidisseur (4) est de moins de 25 °C.

10. Procédé selon l'une ou plusieurs des revendications 1 à 8, **caractérisé en ce que** la surface du film thermoscellable présente une température de scellage minima de 70 à <100 °C et la température de la surface du film à la sortie du rouleau refroidisseur (4) est de moins de 20 °C.

11. Procédé selon l'une ou plusieurs des revendications 1 à 10, **caractérisé en ce que** le film est en plusieurs couches et présente une couche de base et au moins une couche de surface scellable.

12. Procédé selon l'une ou plusieurs des revendications 1 à 11, **caractérisé en ce que** la couche de base contient 90 à 99 % en poids d'un polymère de propylène et la couche de surface 90 à 100 % en poids de polymères oléfiniques avec 2 à 10 atomes de carbone.

13. Procédé selon l'une ou plusieurs des revendications 1 à 12, **caractérisé en ce que** les polymères oléfiniques sont un copolymère

d'éthylène et de propylène ou

d'éthylène et de butylène-1 ou

de propylène et de butylène-1 ou

un terpolymère

d'éthylène et de propylène et de butylène-1

ou un mélange de deux ou de plusieurs des homopolymères, des copolymères et des terpolymères cités ou un blend de deux ou de plusieurs des homopolymères, des copolymères et des terpolymères cités, le cas échéant mélangé avec un ou plusieurs des homopolymères, copolymères et terpolymères cités.

14. Procédé selon l'une ou plusieurs des revendications 1 à 13, **caractérisé en ce que** la couche de surface a une épaisseur de 0,1 à 5 μm, de préférence de 0,2 à 1,5 μm.

**15.** Procédé destiné à la fabrication d'un film dont les matières fondues correspondant à chacune des couches du film sont coextrudées dans une filière plate en forme de fente, le film ainsi obtenu à partir des matières en fusion étant débité sur un ou plusieurs rouleaux afin de se solidifier, le film étant ensuite étiré au moins monoaxialement, de préférence biaxialement, thermofixé et traité à la flamme, **caractérisé en ce qu'**il est traité à la flamme d'après un procédé selon la revendication 1.

**16.** Utilisation d'un film fabriqué d'après un procédé selon la revendication 15.

**_Fig. 1_**

**_Fig. 1A_**

Fig. 2

**_Fig. 3_**